(19) Europäisches Patentamt
European Patent Office
Office européen des brevets

(11) **EP 2 983 509 B1**

(12) **EUROPEAN PATENT SPECIFICATION**

(45) Date of publication and mention
of the grant of the patent:
**21.11.2018 Bulletin 2018/47**

(51) Int Cl.:
*A23L 27/00* (2016.01)    *A23K 10/40* (2016.01)
*A23K 20/20* (2016.01)    *A23L 27/40* (2016.01)
*C01B 33/12* (2006.01)    *C08K 3/36* (2006.01)

(21) Application number: **14721098.3**

(22) Date of filing: **14.03.2014**

(86) International application number:
**PCT/US2014/027677**

(87) International publication number:
**WO 2014/152736 (25.09.2014 Gazette 2014/39)**

(54) **SILICA BASED SALT SOLUTION DELIVERY SYSTEM**

SYSTEM ZUR ABGABE EINER SALZLÖSUNG AUF SILICA-BASIS

SYSTÈME D'ADMINISTRATION DE SOLUTION DE SELS À BASE DE SILICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2013 US 201361793088 P
11.03.2014 US 201414204660**

(43) Date of publication of application:
**17.02.2016 Bulletin 2016/07**

(73) Proprietor: **Evonik Degussa GmbH
45128 Essen (DE)**

(72) Inventors:
• **GALLIS, Karl, W.
Perryville, MD 21903 (US)**
• **NASSIVERA, Terry, W.
North East, MD 21901 (US)**

(56) References cited:
**EP-A1- 0 937 755        GB-A- 1 588 405
US-A1- 2010 028 496      US-A1- 2011 082 040
US-A1- 2012 322 893**

• **Anonymous: "Anti-Caking Agents - Flo-Gard |
PPG Silica Products", , 6 October 2016
(2016-10-06), XP055308432, Retrieved from the
Internet:
URL:http://www.ppgsilica.com/Applications/
Carrier-and-Free-Flow/Food.aspx [retrieved on
2016-10-06]**

**Description**

**BACKGROUND**

**TECHNICAL FIELD**

The present disclosure relates to salt delivery compositions that can be useful for the delivery of salt in, for example, snacks and prepared foods.

**TECHNICAL BACKGROUND**

There is a need to improve the healthiness of snack and prepared foods. These foods commonly contain large quantities of salt and preservatives to achieve the desired taste, however, sodium has long been linked to health problems, especially those related to the cardiovascular system. As a result, there is pressure from governments around the world for producers to reduce the quantity of salt used in snack and prepared foods. Methods to reduce the quantity of salt in foods have been discussed in detail by Morley in "Novel Strategies for Reducing Sodium", Food Technology, January 2012, Volume 66, pages 53-62. Morley discusses several potential methods for achieving this goal. One possibility involves substituting the sodium ion in sodium chloride with another ion such as potassium chloride. Another option discussed was the addition of a salt enhancer, such as an amino acid that could boost the perception of taste when lower quantity of salt was used. Care must be taken with these methods to insure a negative taste is not imparted into the food as a percentage of the salt is substituted with another ingredient. Alternatively, it was mentioned that physical modification of the sodium chloride salt by manipulation of the physical form and/or the size of the salt crystals can be performed. Since salt needs to dissolve in the mouth before it can be tasted, any salt that does not dissolve in the mouth as the food is consumed simply passes to the stomach where it is absorbed into the body in its entirety. Changes to the salt crystal and/or salt particle size resulting in a faster dissolution rate could allow the quantity of the salt used in food to be reduced without negatively impacting taste, as long as the dissolution profiles are similar. Even with these manipulations of the salt crystal and/or salt particle size, it is likely that a percentage of salt still remains insoluble in the mouth during the limited timeframe of which the food is consumed, and not contributing to taste.

US 2011/0082040 A1 discloses a composition comprising precipitated silica granules and a liquid additive for delivering agricultural ingredients.

It is furthermore known from EP 0937755 A1 that precipitated silicas can be used for the absorption of liquid active substances, in particular vitamins.

GB 1588405 discloses a process for raising livestock for slaughter including feeding perchlorate.

It is furthermore known from US 2012/0322983 A1 that granular silicas can be used as support material, especially as support for catalyst for fixed bed reactors.

Accordingly, there exists a general need to develop new methods and compositions that can allow for reduced levels of salt in foods without sacrificing the salty taste. This need and other needs are satisfied by the compositions and methods of the present disclosure.

**SUMMARY**

In accordance with the purpose(s) of the invention, as embodied and broadly described herein, this disclosure, in one aspect, relates to salt delivery compositions as defined in the claims, that can be useful for the delivery of salt in, for example, snacks and prepared foods.

In one aspect, the present disclosure provides compositions and methods that can allow for reduced levels of salt in foods without sacrificing the salty taste.

Additional aspects of the invention will be set forth in part in the description, examples, and figures which follow, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

**BRIEF DESCRIPTION OF THE FIGURES**

The accompanying figures, which are incorporated in and constitute a part of this specification, illustrate several aspects and together with the description serve to explain the principles of the invention.

FIG. 1 is a graph of sodium release studies comparing two versions of commercially available salt to loaded carrier materials (i.e. silica samples) over a period of 30 seconds, in accordance with various aspects of the present disclosure.

FIG. 2 is a graph of sodium release studies comparing two versions of commercially available salt to loaded carrier materials (i.e. silica samples) over a period of 30 seconds, in accordance with various aspects of the present disclosure.

FIG. 3 is a graph of sodium release studies at reduced concentrations comparing commercially available salt samples with loaded carrier materials, in accordance with various aspects of the present disclosure.

## DESCRIPTION

The present invention can be understood more readily by reference to the following detailed description of the invention and the Examples and Figures included therein. Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, example methods and materials are now described.

As used herein, the terms "optional" or "optionally" means that the subsequently described event or circumstance can or cannot occur, and that the description includes instances where said event or circumstance occurs and instances where it does not.

The surface area of a silica material can be determined using conventional surface area analysis techniques, such as, for example, Brunauer, Emmett, and Teller ("BET"). BET surface area measurements are determined by measuring the amount of nitrogen adsorbed on a surface, as described in Brunaur et al., J. Am. Chem. Soc., 60, 309 (1938).

Oil Absorption, frequently expressed as the oil absorption number ("OAN"), of a silica material can be determined using a rubout method, wherein a quantity of linseed oil is mixed with a silica material by rubbing with a spatula on a smooth surface until a stiff putty-like paste is formed. The amount of oil needed to form a stiff paste that curls when spread out is measured. The OAN can then be expressed as the volume of oil required per unit weight of silica material to saturate the silica material. A higher oil absorption level indicates a higher structure silica, for example, aggregates having a higher amount of void space between primary individual fused silica particles. Similarly, a low oil absorption value indicates a low structure silica, for example, aggregates having a smaller amount of void space between primary individual fused silica particles. In one aspect, linseed oil can be used to determine the oil absorption value for a silica material.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

As briefly described above, the present disclosure provides a composition wherein a carrier material can be utilized to deliver a salt solution without adversely affecting the taste of a food product. In another aspect, the present disclosure provides a method wherein one or more salts and/or solutions thereof can be contacted with a carrier material having a porous surface, such that the carrier material containing the one or more salts and/or solutions thereof can impart desirable taste characteristics to a subject upon ingestion or contact with taste buds, while retaining all or a portion of the salt in the carrier material. In another aspect, such a method can reduce and/or prevent the absorption of salt by the subject. In another aspect, the present disclosure provides a method wherein a salt solution can be contacted with a carrier material, such as, for example, a silica or silicate material, such that at least a portion of the salt solution is absorbed or otherwise entrained in pores on the surface of the carrier particle. In such an aspect, the salt solution can be readily released upon contact with water or saliva, such that a salt taste can be imparted quickly and without the need to dissolve solid salt particles.

The invention described below involves carrying a salt solution, such as, for example, a concentrated salt solution, on the surface of and/or in the pores of a carrier material, such as, for example, a silica or silicate based carrier, such that nearly the entire salt solution will exit the carrier particles when exposed to saliva and/or water. Since the salt is already dissolved, nearly all of the salt contained within or on the surface of the carrier material can contribute to taste. This can allow for reduced levels of salt in foods without sacrificing a desirable salty taste.

The invention provides a salt delivery composition comprising a carrier material having a porous surface and one or more salt solutions disposed in a least a portion of the pores thereof wherein the carrier material has an oil absorption number of 200 to 300 cc/100 g and a salt solution carrying capacity of at least 50 %, wherein the oil absorption number and the salt solution carrying capacity are measured as defined in the description, the carrier material comprises a precipitated silica, a silicate, or a combination thereof and the one or more salt solutions comprises sodium chloride, iodized sodium chloride, sea salt, or a combination thereof.

In various aspects, the carrier material of the present disclosure can comprise a particulate material capable of holding and/or carrying salt solution. In one aspect, the carrier material comprise a silica material, a silicate material, or a combination thereof. In another aspect, the carrier material can comprise a precipitated silica. In yet another aspect, the carrier material can comprise a silicate material, such as, for example, a calcium silicate. In one aspect, a silica material can be prepared from any method suitable for preparing a silica material that can carry a salt solution. In various aspects, the carrier material can comprise a ZEOFREE® precipitated silica, such as, for example, ZEOFREE® 5161, ZEOFREE® 5162, ZEROFREE® Plus 5191, ZEOFREE® Plus 5193, or ZEOFREE® 80 precipitated silica; a ZEOSYL® precipitated silica, such as, for example, ZEOSYL® 11OSD precipitated silica; a ZEOTHIX® precipitated silica, such as, for example, ZEOTHIX® 177 or ZEOTHIX® 265 precipitated silica; a ZEOLEX® precipitated silica, such as, for example, ZEOLEX® 7A precipitated silica; a HUBERSORB® calcium silicate, such as, for example, HUBERSORB® 250 or HUBERSORB® 600; or a combination thereof. Carrier materials, such as silica and/or silicate materials, are commercially available. Each of the exemplary carrier materials recited herein are available from I.M . Huber Corporation (Atlanta, Georgia, USA).

In one aspect, the carrier material can exhibit a particle size of up to about 50 μm, for example, about 2, 3, 4, 5, 7, 9, 11, 13, 15, 17, 19, 21, 23, 25, 27, 29, 31, 33, 35, 37, 39, 41, 43, 45, 47, 49, or 50 μm; or up to about 30 μm, for example, about 2, 3, 4, 5, 7, 9, 11, 13, 15, 17, 19, 21, 23, 25, 27, 29, or 30 μm. In another aspect, the carrier material can exhibit a particle size of from about 5 μm to about 45 μm, for example, about 5, 7, 9, 11, 13, 15, 17, 19, 21, 23, 25, 27, 29, 31, 33, 35, 37, 39, 41, 43, or 45 μm; from about 3 μm to about 30 μm, for example, about 3, 5, 7, 9, 11, 13, 15, 17, 19, 21, 23, 25, 27, 29, or 30 μm; from about 5 μm to about 30 μm, for example, about 5, 7, 9, 11, 13, 15, 17, 19, 21, 23, 25, 27, 29, or 30 μm; from about 10 μm to about 30 μm, for example, about 10, 12, 14, 16, 18, 20, 22, 24, 26, 28, or 30 μm; or from about 15 μm to about 30 μm, for example, about 15, 16, 18, 20, 22, 24, 26, 28, or 30 μm. It should be understood that particle size of a carrier material, such as, for example, a silica and/or silicate material, can be a distributional property and that at least a portion of particles can have a particle size less than and/or greater than the recited value. In yet another aspect, any of the particle sizes recited herein can comprise a median particle size for a particular sample of carrier material.

In one aspect, the carrier material can exhibit moisture level prior to contact with a salt solution of less than about 10 wt.%, for example, about 0.1, 0.5, 1, 1.5, 2, 2.5, 3, 4, 5, 6, 7, 8, 9, 9.5, or 9.9 wt.%; of less than about 8 wt.%, for example, about 1, 2, 3, 4, 5, 6, 7, or 8 wt.%; or from about 4 wt.% to about 8 wt.%, for example, about 4, 4.5, 5, 5.5, 6, 6.7, 7, 7.5, or 8 wt.%. It should be understood that a carrier material having a high moisture level, for example, greater than about 10 wt.%, can, in various aspects, have a limited ability to carry a salt solution.

The carrier material of the present disclosure exhibit a carrying capacity of at least about 50 %, as defined by the following equation:

$$\frac{g_{\text{salt solution}}}{(g_{\text{salt solution}} + g_{\text{carrier}})} \times 100,$$

for example, about 50, 55, 60, 65, 70, 75, 80, 85, 90, 95 % or more. In another aspect, the carrier material can exhibit a carrying capacity of from about 50 % to about 80 %, for example, about 50, 55, 60, 65, 70, 75, or 80 %; or from about 50 % to about 75 %, for example, about 50, 55, 60, 65, 70, or 75 %. The carrying capacities recited herein refer to a salt solution carrying capacity.

Determination of carrying capacity can be performed by preparing a concentrated salt solution, for example, by adding 400 g of sodium chloride to 1,000 ml of deionized water. It should be noted that the solubility of sodium chloride in room temperature water is about 36 g per 100 g of water). 2 g of the carrier material, such as, for example, a precipitated silica material, can then be placed in a container wherein the concentrated salt solution is added in 0.25 g increments. After each addition of the concentrated salt solution, the container can be capped and agitated, for example, with a test tube vibrator, until all of the water is absorbed and the powder is free flowing and free of lumps. This can be repeated until lumps are present which do not disappear upon agitation. Once lumps appear, the previous measurement can be used to determine the carrying capacity.

A summary of exemplary carrier materials and their salt carrying capacities, are detailed in Table 1, below.

Table 1. A summary of salt carrying capacity on silica.

| Product | NaCl Solution Carrying Capacity (%) | 90% of Carrying Capacity (%) | Quantity of NaCl (%) | Quantity of Na (%) |
|---|---|---|---|---|
| ZEOFREE® 5161 | 66.6 | 64.3 | 17.0 | 6.7 |

(continued)

| Product | NaCl Solution Carrying Capacity (%) | 90% of Carrying Capacity (%) | Quantity of NaCl (%) | Quantity of Na (%) |
|---|---|---|---|---|
| ZEOFREE® 5162 | 60.0 | 57.4 | 15.2 | 6.0 |
| ZEOFREE® Plus 5191 | 70.4 | 68.2 | 18.1 | 7.1 |
| ZEOFREE® Plus 5193 | 65.9 | 62.8 | 16.6 | 6.5 |
| ZEOFREE® 80 (Ref.) | 50.0 | 47.3 | 12.5 | 4.9 |
| ZEOSYL® 1IOSD | 66.6 | 64.3 | 17.0 | 6.7 |
| ZEOTHIX® 177 | 52.9 | 50.4 | 13.3 | 5.2 |
| ZEOTHIX® 265 | 52.9 | 50.4 | 13.3 | 5.2 |
| ZEOLEX® 7A (Ref.) | 42.9 | 40.2 | 10.7 | 4.2 |
| HUBERSORB® 250 | 50.0 | 47.4 | 12.6 | 4.9 |

In another aspect, a carrier material can have a sulfate level suitable for use in carrying and delivering a salt solution. In various aspects, the carrier material can exhibit a sulfate level of from about 0 wt.% to about 5 wt.%, for example, about 0.1, 0.3, 0.5, 0.7, 0.9, 1, 1.3, 1.5, 1.7, 1.9, 2.1, 2.3, 2.5, 2.7, 2.9, 3.1, 3.5, 4, 4.5, or 5 wt.%; or from about O wt.% to about 3.5 wt.%, for example, about 0.1, 0.3, 0.5, 0.7, 0.9, 1, 1.3, 1.5, 1.7, 1.9, 2.1, 2.3, 2.5, 2.7, 2.9, 3.1, or 3.5 wt.%. In still other aspects, the carrier material can exhibit a sulfate level less than or greater than any value specifically recited herein and the present invention is not intended to be limited to any particular sulfate level.

In another aspect, a carrier material can have a BET surface area suitable for use in carrying and delivering a salt solution. In various aspects, the carrier material can exhibit a BET surface area of from about 50 $m^2$/g to about 400 $m^2$/g, for example, about 50, 60, 80, 100, 120, 140, 160, 180, 200, 220, 240, 260, 280, 300, 320, 340, 360, 380, or 400 $m^2$/g; or from about 75 $m^2$/g to about 325 $m^2$/g, for example, about 75, 100, 125, 150, 175, 200, 225, 250, 275, 300, or 325 $m^2$/g.

In another aspect, a carrier material can have a pH suitable for use in carrying and delivering a salt solution. In various aspects, the carrier material can exhibit a pH of from about 6 to about 10, for example, about 6, 6.5, 7, 7.5, 8, 8.5, 9, 9.5, or 10; or from about 6 to about 8, for example, about 6, 6.25, 6.5, 6.75, 7, 7.25, 7.5, 7.75, or 8.

The carrier material exhibit an oil absorption number of from 200 cc/100 g to 300 cc/100 g, for example, about 220, 240, 260, or 280 cc/100 g; or from 200 cc/100 g to about 270 cc/100 g, for example, about 210, 230, 250, or 270 cc/100 g. General physical properties of exemplary carrier materials are illustrated in Table 2, below.

Table 2. Physical properties of materials tested

| Ex. | Description | Moisture (%) | Sulfate (%) | Oil (cc/100 g) | BET ($m^2$/g) | pH | Median Particle Size ($\mu$m) |
|---|---|---|---|---|---|---|---|
| 1 | ZEOFREE® 5161 | 6.4 | 0.7 | 229 | 112 | 7.4 | 22.7 |
| 2 | ZEOFREE® 5162 | 6.2 | 0.8 | 221 | 114 | 7.2 | 18.0 |
| 3 | ZEOFREE® Plus 5191 | 6.7 | 0.8 | 261 | 362 | 6.1 | 28.4 |
| 4 | ZEOFREE® Plus 5193 | 4.9 | 1.0 | 258 | 308 | 6.3 | 13.6 |
| 5 | ZEOFREE® 80 (Ref.) | 6.0 | 3.4 | 193 | 81 | 7.1 | 14.2 |
| 6 | ZEOSYL® 11OSD | 6.2 | 2.2 | 203 | 84 | 7.5 | 20.8 |
| 7 | ZEOTHIX® 177 | 5.9 | 0.3 | 215 | 110 | 7.7 | 3.5 |
| 8 | ZEOTHIX® 265 | 6.0 | 0.7 | 214 | 146 | 7.3 | 3.3 |
| 9 | ZEOLEX® 7A (Ref.) | 6.6 | --- | 138 | 184 | 6.7 | 11.9 |
| 10 | HUBERSORB® 250 | 6.3 | 0.5 | 259 | 109 | 9.9 | 18.5 |
| 11 | HUBERSORB® 600 (Ref.) | 6.8 | 0.4 | 461 | 198 | 9.9 | 7.5 |

The salt used in the present invention comprises sodium chloride, iodized sodium chloride, sea salt, or a combination thereof. In other aspects, the salt can further comprise anti-caking agents, minerals, flow control additives, or other materials typically found in food products.

To prepare the loaded carrier material of the present invention, the carrier material can be contacted with a salt solution. In one aspect a salt solution can be prepared by dissolving a quantity of salt in water. In another aspect, the salt solution can comprise a concentrated salt solution that is saturated or partially saturated at room temperature. In another aspect, the salt solution can be a saturated or super-saturated solution at room temperature of one or more salt compounds. In an exemplary aspect, a saturated sodium chloride solution can be prepared by dissolving about 360 g of sodium chloride in 1,000 ml of deionized water. In another aspect, a super-saturated sodium chloride solution can be prepared by adding about 400 g of sodium chloride to 1,000 ml of deionized water and allowing the salt to dissolve. In another aspect, a higher concentration salt solution can allow higher loadings of salt for a given quantity of carrier material.

The salt solution, or a portion thereof, can then be contacted with the carrier material. In one aspect, a portion of the salt solution can be contacted with the carrier material and agitated or mixed prior to adding an additional quantity of salt solution.

In another aspect, the carrier material can be loaded up to, for example, about 70 %, 75 %, 80 %, 85 %, 90 %, or 95 % of the carrying capacity of the material. In a specific aspect, the carrier material can be loaded up to, for example, about 90 % of the carrying capacity of the material.

A loaded carrier material can release all or a portion of the carried salt quickly upon contact with saliva and/or water. In one aspect, a loaded carrier material can release at least about 75 % of the carried salt within about 10 seconds after contact with saliva and/or water.

The salt release rate of a loaded carrier material can be determined by measuring the conductivity of a volume of water upon addition of the loaded carrier material. In one aspect, the time needed to attain maximum conductivity can be an indicator of the salt release rate of the material. In one aspect, maximum conductivity can be attained within about 30 seconds after contact of the loaded carrier material with water.

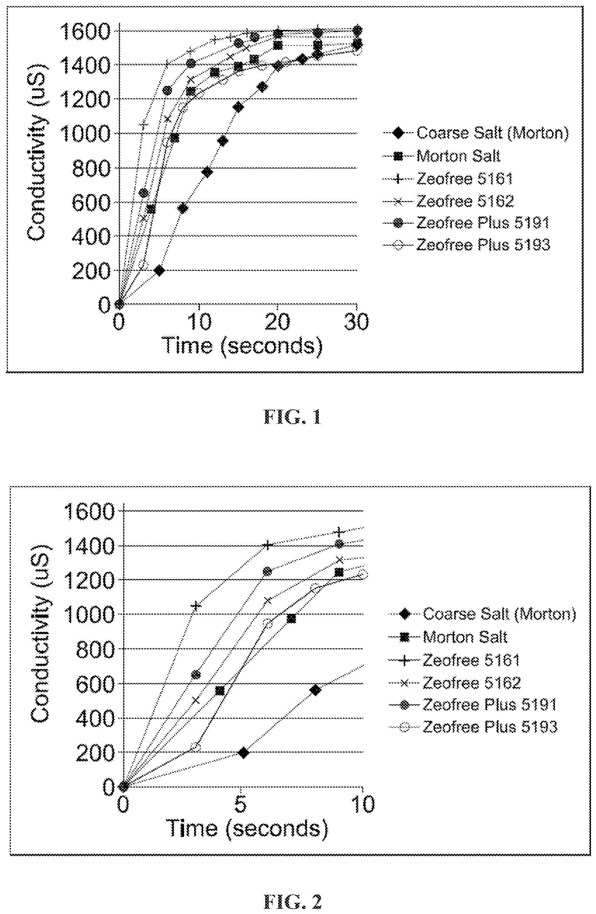

In an exemplary salt release (i.e., conductivity) measurement, 120 g of deionized water can be added to a 150 ml beaker and stirred with a 2.54 cm (1") stir bar at a rate sufficient to create a vortex approximately 1.27 cm (1/2") higher than the stir bar. A conductivity probe can then be placed in the beaker at a depth sufficient to cover the electrode. 100 mg of salt, or the quantity of loaded carrier material needed to deliver 100 mg of salt, can then be added to the solution and the conductivity measured for 60 seconds. A description of samples prepared for salt release measurements is detailed in Table 3, below. The salt release profiles (conductivity vs. time) are illustrated in Figures 1-3.

**Table** 3. Samples for Salt Solution Release Measurement

| Product | Deionized water (g) | Loaded Carrier Material added (g) | Equivalent NaCl added (mg) |
|---|---|---|---|
| MORTON® Coarse Salt (Ref.) | 120.0 | --- | 100 |
| MORTON® Salt (Ref.) | 120.0 | --- | 100 |
| ZEOFREE® 5161 | 120.0 | 588 | 100 |
| ZEOFREE® 5162 | 120.0 | 657 | 100 |
| ZEOFREE® Plus 5191 | 120.0 | 553 | 100 |
| ZEOFREE® Plus 5193 | 120.0 | 601 | 100 |

The conductivity of the salt and loaded carrier material samples can be about 1,500 to 1,600 $\mu$S at equilibrium. The equilibrium time for commercially available salt samples can be dependent upon, for example, the particle size of the salt, wherein a smaller particle size salt can be more rapidly dissolved. The loaded carrier material samples can exhibit conductivity values at least as high as a salt control for the 30 seconds of the experiment. As the particle size and the absorptive capacity of the carrier material increased (ex. ZEOFREE® Plus 5191 vs. ZEOFREE® Plus 5193 precipitated silica materials and ZEOFREE® 5161 vs. ZEOFREE® 5162 precipitated silica materials), conductivity values can increase. In one aspect, ZEOFREE® 5161 precipitated silica, with a large median particle size can exhibit a high conductivity in a conductivity based salt release test.

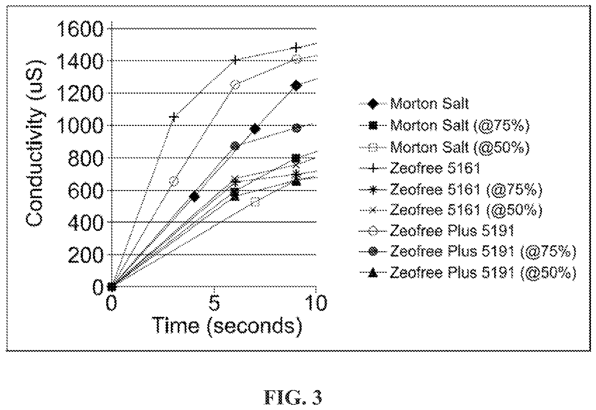

In another aspect, a concentrations study was performed (FIG. 3), wherein the quantity of salt for the loaded carrier material were adjusted to reach 75 mg salt (at 75%) and 50 mg salt (at 50%) in order to study the conductivity profile as a function of concentration. The loaded carrier material samples all exhibited greater conductivity values as compared to the commercially available salt control samples at 75% and 50% concentrations. In one aspect, ZEOFREE® Plus 5191 precipitated silica at 75% exhibited the same conductivity profile through the first five seconds as a MORTON® Salt control at 100 %, indicating that the solution concentration of the salt during the first five seconds of the consumption of a food would be the same. If the average time for the flavor experience for the consumption of a bite size snack food, for example, is five seconds, then the overall salt concentration can be reduced with the loaded carrier material without compromising taste. In another aspect, ZEOFREE® Plus 5191 and ZEOFREE® 5161 precipitated silica at a 50% concentration also had a conductivity profile similar to the commercially available salt control at 75%.

In one aspect, the present invention allows for the delivery of a salt solution that can be readily released upon contact with, for example, saliva. Such a rapid release of salt can impart a higher degree of salt flavor to a subject's taste buds than, for example, a solid salt product that must dissolve. In another aspect, such a salt delivery system can impart a desirable salt taste to food products, but does not leave significant amounts of salt not yet dissolved or in contact with taste buds, that can be absorbed by the subject. In one aspect, all or a portion of the salt solution disposed in the pores of the carrier material can be released quickly upon contact with water and/or saliva.

In another aspect, a taste test can be performed to determine efficacy and salt release of a loaded carrier material. In an exemplary taste test, 50 mg of table salt can be tasted and judged for intensity of salt flavor and time to reach maximum intensity. The same test can be performed with a loaded carrier material, such as, for example, ZEOFREE® Plus 5191, such that an equal salt concentration can be delivered. In an exemplary experiment, two subjects felt that the loaded carrier material delivered a more rapid release of salt (i.e., by taste) than a comparable salt material alone.

## Claims

1. A salt delivery composition comprising a carrier material having a porous surface and one or more salt solutions disposed in at least a portion of the pores thereof wherein the carrier material has

   an oil absorption number of 200 to 300 cc/100 g and a salt solution carrying capacity of at least 50 %, wherein the oil absorption number and the salt solution carrying capacity are measured as defined in the description, the carrier material comprises a precipitated silica, a silicate, or a combination thereof and the one or more salt solutions comprises sodium chloride, iodized sodium chloride, sea salt, or a combination thereof.

2. The salt delivery composition of claim 1, wherein the carrier material comprises a precipitated silica.

3. The salt delivery composition of any preceding claim, wherein the carrier material has a carrying capacity of from 50 % to 80 %.

4. The salt delivery composition of any preceding claim, wherein the carrier material is loaded with one or more salt solutions up to 90 % of the carrier material's carrying capacity.

5. A food product comprising the salt delivery silica composition of any preceding claim.

6. A method of preparing a salt delivery composition according to any one of claims 1-4 comprising contacting the carrier material having a porous surface with the one or more salt solutions, such that a least a portion of the one or more salt solutions is disposed in at least a portion of the pores of the carrier material.

7. A method comprising contacting the salt delivery composition of any of claims 1-4 with a food product.

## Patentansprüche

1. Salzabgabezusammensetzung, umfassend ein Trägermaterial mit einer porösen Oberfläche und eine oder mehrere Salzlösungen, die in wenigstens einem Teil der Poren davon angeordnet sind, wobei das Trägermaterial eine Ölabsorptionszahl von 200 bis 300 cc/100 g und eine Salzlösungsladekapazität von wenigstens 50 % aufweist, wobei die Ölabsorptionszahl und die Salzlösungsladekapazität wie in der Beschreibung definiert gemessen werden, das Trägermaterial ein gefälltes Siliciumdioxid, ein Silicat oder eine Kombination davon umfasst und die eine oder mehreren Salzlösungen Natriumchlorid, iodisiertes Natriumchlorid, Meersalz oder eine Kombination davon umfassen.

2. Salzabgabezusammensetzung gemäß Anspruch 1, wobei das Trägermaterial ein gefälltes Siliciumdioxid umfasst.

**3.** Salzabgabezusammensetzung gemäß einem der vorstehenden Ansprüche, wobei das Trägermaterial eine Ladekapazität von 50 % bis 80 % aufweist.

**4.** Salzabgabezusammensetzung gemäß einem der vorstehenden Ansprüche, wobei das Trägermaterial mit einer oder mehreren Salzlösungen bis zu 90 % der Ladekapazität des Trägermaterials beladen ist.

**5.** Lebensmittelprodukt, umfassend die Salzabgabe-Siliciumdioxidzusammensetzung gemäß einem der vorstehenden Ansprüche.

**6.** Verfahren zur Herstellung einer Salzabgabezusammensetzung gemäß einem der Ansprüche 1-4, umfassend Inkontaktbringen des Trägermaterials, das eine poröse Oberfläche aufweist, mit der einen oder den mehreren Salzlösungen, so dass wenigstens ein Teil der einen oder mehreren Salzlösungen in wenigstens einem Teil der Poren des Trägermaterials angeordnet wird.

**7.** Verfahren, umfassend Inkontaktbringen der Salzabgabezusammensetzung gemäß einem der Ansprüche 1-4 mit einem Lebensmittelprodukt.


**Revendications**

**1.** Composition de distribution de sel comprenant un matériau de support ayant une surface poreuse et une ou plusieurs solutions de sel disposées dans au moins une partie des pores de celui-ci dans laquelle le matériau de support présente un indice d'absorption d'huile de 200 à 300 cm$^3$/100 g et une capacité de support de solution de sel d'au moins 50 %, dans laquelle l'indice d'absorption d'huile et la capacité de support de solution de sel sont mesurés comme défini dans la description, le matériau de support comprend une silice précipitée, un silicate, ou une combinaison de ceux-ci et les une ou plusieurs solutions de sel comprennent du chlorure de sodium, du chlorure de sodium iodé, du sel de mer, ou une combinaison de ceux-ci.

**2.** Composition de distribution de sel selon la revendication 1, dans laquelle le matériau de support comprend une silice précipitée.

**3.** Composition de distribution de sel selon l'une quelconque des revendications précédentes, dans laquelle le matériau de support a une capacité de support de 50 % à 80 %.

**4.** Composition de distribution de sel selon l'une quelconque des revendications précédentes, dans laquelle le matériau de support est chargée avec une ou plusieurs solutions de sel jusqu'à 90 % de la capacité de support du matériau de support.

**5.** Produit alimentaire comprenant la composition de silice de distribution de sel selon l'une quelconque des revendications précédentes.

**6.** Procédé de préparation d'une composition de distribution de sel selon l'une quelconque des revendications 1 à 4 comprenant la mise en contact du matériau de support ayant une surface poreuse avec les une ou plusieurs solutions de sel, de sorte qu'au moins une partie des une ou plusieurs solutions de sel soit disposée dans au moins une partie des pores du matériau de support.

**7.** Procédé comprenant la mise en contact de la composition de distribution de sel selon l'une quelconque des revendications 1 à 4 avec un produit alimentaire.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110082040 A1
- EP 0937755 A1
- GB 1588405 A
- US 20120322983 A1

**Non-patent literature cited in the description**

- **MORLEY.** Novel Strategies for Reducing Sodium. *Food Technology,* January 2012, vol. 66, 53-62
- **BRUNAUR et al.** *J. Am. Chem. Soc.,* 1938, vol. 60, 309